# EUROPÄISCHE PATENTANMELDUNG

(11) **EP 2 065 658 A1**
(43) Veröffentlichungstag der Anmeldung: **03.06.2009**
(21) Anmeldenummer: 07121752.5
(22) Anmeldetag: 28.11.2007
(51) Int. Cl.: F24J 2/32, F24J 2/20, F24J 2/26

(54) **Solarabsorber und Verfahren zum Herstellen eines Solarabsorbers**

(71) Anmelder: Hochschule für Technik Rapperswil Institut für Solartechnik SPF, 8640 Rapperswil (CH)
(72) Erfinder: Brunold, Stefan, 8807, Freienbach (CH)
(74) Vertreter: Wenger, René

(57) **Zusammenfassung**

Ein Solarabsorber mit einem geschlossenen Primärkreislauf enthält ein Arbeitsmedium, das in einem Absorberbereich (4) erwärmbar ist und in einem Wärmetauscherbereich (5) mit einer Sekundärleitung (3) in thermischer Wirkverbindung steht, durch welches ein Wärmeträgerfluid durchführbar ist. Der Primärkreislauf (2) basiert dabei auf einem Pulsating Heat Pipe-Prinzip (PHP), wobei die PHP wenigstens im Absorberbereich (4) entlang eines Flächenabschnitts (6) geführt ist. Der Primärkreislauf (2) ist im Wärmetauscherbereich (4) durch eine Mehrzahl von Schlaufen (14) und/oder Windungen (11) gebildet. Die Sekundärleitung (3) liegt an den Schlaufen (14) und/oder Windungen (11) an oder nimmt diese auf.

## Beschreibung

Die Erfindung betrifft einen Solarabsorber gemäss dem Oberbegriff von Anspruch 1 sowie ein Verfahren zum Herstellen eines Solarabsorbers. Mit Solarabsorbern lässt sich Sonnenenergie auf einfache Art und Weise nutzen. Sonnenstrahlung wird mittels einer Absorberschicht in Wärmeenergie umgewandelt, die schliesslich durch Wärmeübertragung zu einem Verbraucher herangeführt wird.

Konventionelle Solarabsorber bestehen im Wesentlichen aus einem flächig ausgebildeten und mit einer Absorberschicht beschichtetem Absorberblech, unter dem Rohrleitungen geführt sind, die von einem (in der Regel auf Wasser basierenden) Wärmeträgerfluid direkt durchströmt sind. Weit verbreitet sind dabei Absorberbleche und Rohre, die aus Kupfer gefertigt sind. Diese Solarabsorber sind durch die steigenden Rohstoffpreise für Kupfer erheblich teurer geworden. In der Praxis hat sich gezeigt, dass eine Substitution der Materialien beispielsweise durch Stahl oder Aluminium nicht ohne weiteres möglich ist. Derartige Solarabsorber weisen eine zu geringe thermische Effizienz oder mangelnde Korrosionsbeständigkeit auf. Ein weiterer Nachteil konventioneller Solarabsorber besteht darin, dass wenn, wie im Falle der Stagnation, dem Solarabsorber keine oder zu wenig Energie mit dem Wärmeträgerfluid über den Solarkreislauf abgeführt wird, das Wärmeträgerfluid wegen der hohen thermischen Belastung im Laufe der Zeit zerstört wird, was einen Austausch desselben nötig macht.

Aus dem Stand der Technik sind Solarabsorber bekannt geworden, bei denen der Solarkreislauf vom Absorberbereich getrennt geführt wird. Die durch die Sonnenstrahlung erzeugte Wärmeenergie im Absorber wird hierzu über Heat Pipes zum Solarkreislauf geführt. Ein gattungsmässig vergleichbarer Solarabsorber ist beispielsweise aus der US 5,931,156 bekannt geworden, bei der ein Reservoir oder eine Rohrleitung in thermischer Wirkverbindung mit einer Heat Pipe-Anordnung steht. Die Heat Pipe enthält parallel in Längsrichtung zueinander verlaufende Rohrstücke, die einem Absorberbereich zugeordnet sind. Die Rohrstücke münden in einen Ringspalt, dem Kondensator, der durch zwei konzentrische Rohre gebildet ist, wo der Wärmetausch zum Wärmeträgerfluid stattfindet. Der Kollektor weist einen relativ aufwendigen Aufbau auf. Die Verwendung einer konventionellen Heat Pipe hat den Nachteil, dass für ein einwandfreies Funktionieren die einzelnen Heat Pipes in einem bestimmten Anstellwinkelbereich zur Horizontalen aufgestellt sein müssen. Ein weiterer Nachteil besteht darin, dass eine konventionelle Heat Pipe auch dann noch arbeitet, wenn am Kondensator keine oder zu wenig Energie vom Solarkreis abgeführt wird, was zu einer übermässigen Erhöhung der Temperatur am Kondensator führt. Diese Temperaturerhöhung kann das Wärmeträgerfluid teilweise zerstören und Korrosionsprobleme im Solarkreislauf verursachen.

Es ist daher eine Aufgabe der Erfindung, die Nachteile des Bekannten zu vermeiden und insbesondere einen Solarabsorber der eingangs genannten Art zu schaffen, der einfach herstellbar und mehr oder weniger lageunabhängig aufstellbar ist, sowie eine übermässige Temperaturerhöhung in der Sekundärleitung eines Solarkreislaufes vermeidet. Der Solarabsorber soll sich weiterhin durch eine robuste Bauweise auszeichnen. Sodann soll die Konstruktion des Solarabsorbers die Verwendung von gegenüber Kupfer vergleichsweise günstigen Materialien ermöglichen, während gleichzeitig eine hohe Korrosionsbeständigkeit auch im Solarkreislauf sichergestellt ist.

Diese Aufgaben werden mit einem Solarabsorber gelöst, der die Merkmale in Anspruch 1 aufweist. Das Primärsystem mit dem Arbeitsmedium kann aus einem oder mehreren geschlossenen Primärkreisläufen ("Closed Loop") bestehen. Selbstverständlich ist aber auch vorstellbar, das System als sogenannte "Closed End"-Ausführung zu gestalten. Das Wärmerohr-Prinzip, das die Wärmeübertragung unter Nutzung von Verdampfungs- und Kondensationswärme eines Arbeitsmediums erlaubt, ist dem Fachmann bekannt, wobei hierfür aber vor allem der Begriff "Heat Pipe" gebräuchlich ist. Die Sekundärleitung kann Teil eines Leitungssystems zur Warmwassernutzung in einem Gebäude sein. Durch die Sekundärleitung ist beispielsweise Wasser oder vorteilhaft ein Wasser-Glykol-Gemisch als Wärmeträgerfluid führbar. Die Sekundärleitung kann eine Leitungsanordnung mit einem Einlass und einem Auslass sein, durch welche kontinuierlich das Wärmeträgerfluid durchführbar ist. Die Schlaufen und die Windungen des Primärsystems können aus separaten Bauteilen, beispielsweise einem Rohr bestehen. Statt spezieller Rohre für die Leitungsführung können alternativ diese derart in den Absorberkomponenten integriert sein, dass sich ein Kanalsystem ausbildet.

In einer ersten Ausführungsform kann das Primärsystem als Pulsating-Heat-Pipe (PHP) ausgestaltet sein. Das PHP-Prinzip, das die Wärmeübertragung unter Nutzung von sensibler Wärme als auch von Verdampfungs- und Kondensationswärme eines Arbeitsmediums erlaubt, ist dem Fachmann bekannt. Durch diese Ausgestaltung ist es möglich, den Solarabsorber eines Solarkollektors derart zu betreiben, dass selbst im Falle der Stagnation die Zerstörung des Wärmeträgerfluides im Solarkreislauf praktisch verunmöglicht ist. Wird eine bestimmte, durch die Geometrie und durch die Wahl des Arbeitsmediums des Primärkreis bestimmbare Maximaltemperatur überschritten, so stoppt der Wärmetransport in der Pulsating-Heat-Pipe, wodurch das Wärmeträgerfluid vor zu hohen Temperaturen geschützt ist. Das Primärleitungssystem kann wenigstens im Absorberbereich mäanderförmig ausgestaltet sein.

Vorteilhaft kann es sein, wenn der Flächenabschnitt durch ein Absorberblech gebildet ist. Derartige metallische Flächenabschnitte sind verhältnismässig einfach zu verarbeiten und/oder zu verformen und zeichnen sich - je nach gewähltem Material - durch gute Wärmeleitungseigenschaften aus. Das Absorberblech kann eine Oberseite aufweisen, die im Absorberbereich mit einer strahlungsselektiven Solarabsorberschicht bedeckt ist, wodurch es bei Sonneneinstrahlung auf vorteilhafte Weise erhitzbar ist.

Das Primärsystem im Absorberbereich kann durch wenigstens ein Rohr gebildet sein, das am Flächenabschnitt befestigt ist. Wenn der Flächenabschnitt durch ein Absorberblech gebildet oder vorgegeben ist, ist das wenigstens eine Rohr bevorzugt daran mittels einer gut Wärme leitenden Verbindungstechnik befestigt. Dies kann etwa durch Schweissen, Löten, Klemmen usw. geschehen.

Weiterhin kann es vorteilhaft sein, wenn das Primärsystem im Absorberbereich durch wenigstens ein Rohr gebildet ist, wobei es mit wenigstens einer schraubenförmigen Rohrwindung verbunden ist, die in einer oder um eine Rohrleitung für das Wärmeträgerfluid angeordnet ist.

Die thermische Effizienz des Solarabsorbers kann erhöht werden, wenn der Flächenabschnitt nur den Absorberbereich abdeckt und wenn das Rohr im Verbindungsbereich zwischen dem Absorberbereichs und der schraubenförmigen Rohrwindung zur Bildung eines adiabatischen Abschnitts für die Pulsating-Heat-Pipe frei liegt.

Das Rohr des Absorberbereichs und die dem Wärmetauscherbereich zugeordnete Rohrwindung bestehen vorteilhaft aus demselben Material wie das Absorberblech. Dies kann vorzugsweise ein Material mit hoher spezifischer Wärmeleitfähigkeit sein, wie z.B. Aluminium und Aluminiumlegierungen oder Kupfer und Kupferlegierungen. Die Rohrleitung für das Wärmeträgerfluid kann aus Kupfer oder aus einer Kupferlegierung aber auch aus Aluminium oder aus einer Aluminiumlegierung oder auch aus Stahl oder anderen in der Heizungstechnik gebräuchlichen Materialien bestehen. Weiterhin ist sichergestellt, dass durch die Wahl des gleichen Materials für die Komponenten des Primärsystems mechanische Belastungen durch grosse Temperaturschwankungen erheblich reduziert werden können.

Für einen Solarabsorber, bei dem das Primärsystems wenigstens im Absorberbereich entlang eines Absorberblechs geführt ist, kann es vor allem in herstellungstechnischer Hinsicht vorteilhaft sein, wenn zur Aufnahme des Arbeitsmediums des Primärsystems ein Primärleitungssystem vorgesehen ist, das im Absorberbereich und im Wärmetauscherbereich auf einer gemeinsamen Ebene liegt. Eine solche Anordnung zeichnet sich sodann auch durch eine kompakte Bauweise und geringe Bauhöhe aus.

Besonders vorteilhaft kann es sein, wenn zur Aufnahme des Arbeitsmediums des Primärsystems ein Primärleitungssystem vorgesehen ist, das zwischen dem Absorberblech und einem an diesem anliegenden, vorzugsweise durch ein Blech gebildetes erstes Flächenelement angeordnet ist. Insbesondere wegen der Korrosionsbeständigkeit und aus Festigkeitsgründen bei Temperaturschwankungen sollten die beiden Elemente bevorzugt aus dem gleichen Material bestehen.

Das Primärleitungssystem kann aus Kanälen bestehen, die wenigstens durch das erste Flächenelement geformt sein können. Eine besonders vorteilhafte Formgebung lässt sich erreichen, wenn die Kanäle mittels eines Rollbond-Verfahrens geschaffen sind. Mit Rollbond-Verfahren lassen sich Hohlkörper erzeugen, deren Hohlräume nahezu beliebige Querschnitte und Querschnittsformen einnehmen können.

Das Primärleitungssystem kann im Absorberbereich und im Wärmetauscherbereich jeweils mäanderförmig ausgestaltet sein. Eine solche geometrische Gestaltung des Primärleitungssystems führt zu einer Verlängerung der Strecke der Heat Pipe, insbesondere der Pulsating-Heat-Pipe, wodurch der thermische Wirkungsgrad des Solarabsorbers optimiert werden kann.

Wärmetechnisch kann es vorteilhaft sein, wenn das Primärleitungssystem im Absorberbereich sich in Längsrichtung erstreckende Mäanderschlaufen und im Wärmetauschbereich sich quer zur Längsrichtung des Absorberbereichs erstreckende Mäanderschlaufen aufweisen. Selbstverständlich könnten sich die Mäanderschlaufen des Wärmetauschbereichs auch in eine andere Richtung erstrecken, beispielsweise ebenfalls - wie die Mäanderschlaufen des Absorberbereichs - in Längsrichtung.

Weiterhin kann es vorteilhaft sein, wenn das Primärleitungssystem im Absorberbereich wenigstens eine sich in Längsrichtung erstreckende Mäanderschlaufe aufweist, an deren wärmetauscherseitigen Enden jeweils eine Mäanderanordnung des Wärmetauscherbereichs mit wenigstens zwei Mäanderschlaufen anschliessen.

Die Herstellbarkeit lässt sich weiter vereinfachen, wenn an der Oberseite des Absorberblechs ein mit Hohlräumen versehenes, vorzugsweise durch ein Blech gebildetes zweites Flächenelement befestigt ist, durch welches das Wärmeträgerfluid durchführbar ist. Das Absorberblech erstreckt sich somit gewissermassen in den Wärmetauscherbereich, in dem es eine Überlappungsfläche zum zweiten Flächenelement bildet. Das Absorberblech ist mit anderen Worten sandwichartig zwischen dem ersten Flächenelement und dem zweiten Flächenelement im Wärmetauscherbereich bzw. im Bereich der Überlappungsfläche befestigt. Das zweite Flächenelement kann zum Durchführen des Wärmetauscher-Mediums einen Einlass- und Auslassstutzen aufweisen.

Zum Bilden eines Kanalsystems zwischen Absorberblech und zweitem Flächenelement für die Sekundärleitung (d.h. die Leitung des Solarkreislaufes) können die Hohlräume des zweiten Flächenelements gegen das Absorberblech offen sein. Diese Hohlräume können ebenfalls mittels eines Rollbond-Verfahrens geschaffen sein.

Das Absorberblech und wenigstens das erste Flächenelement sowie gegebenenfalls das zweite Flächenelement können aus Aluminium oder aus einer Aluminiumlegierung bestehen. Mit diesen verhältnismässig preisgünstigen Materialien lassen sich die Investitionskosten für einen Solarabsorber erheblich senken.

Das Primärsystem kann eine Pulsating-Heat-Pipe aufweisen, die derart ausgelegt ist, dass im Wärmetauscherbereich eine Arbeitstemperatur von 150°C und bevorzugt 130°C nicht überschritten werden kann. Als Arbeitsmedium wird dabei bevorzugt Aceton verwendet. Selbstverständlich sind aber je nach Anwendungsfall auch andere Arbeitsmedien einsetzbar. Der genannte Temperaturbereich zeichnet sich insbesondere bei der Verwendung von Aluminium im Solarabsorberkreis dadurch aus, dass bei Verwendung von Wasser-Glykol-Gemischen als Wärmeträgerfluid die Korrosionsgefahr erheblich reduziert ist. Denkbar wäre sogar eine Ausgestaltung mit einer Begrenzung auf unter 100°C, so dass z.B. auch Wasser als Wärmeträgerfluid im Sekundärkreis/Solarkreislauf eingesetzt werden könnte, ohne die Gefahr einer unerwünschten Verdampfung oder übermässigen Druckanstieges. Ein weiterer Aspekt der Erfindung betrifft ein Verfahren zum Herstellen eines Solarabsorbers. Das Verfahren zeichnet sich dadurch aus, dass die Kanäle für das Primärsystem zwischen dem Absorberblech und dem daran anliegenden ersten Flächenelement mittels eines Rollbond-Verfahrens geformt werden. Auf diese Weise lässt sich der Herstellaufwand und die Kosten senken. Vorteilhaft kann es zusätzlich sein, wenn die Kanäle oder Hohlräume für die Sekundärleitung ebenfalls mittels eines Rollbond-Verfahrens geformt werden. Beim Rollbonding handelt es sich um ein Innenhochdruck-Umform-Verfahren, bei dem ein Umformfluid unter sehr hohem Druck (je nach Verfahren bis gegen 4000 bar) in ein Halbzeug aufgegeben und dieses im Bereich der gewünschten Kanäle/Hohlräume aufgeblasen wird. Als Umformfluid werden z.B. in der Praxis Öl-Wasser-Emulsionen oder Polymerschmelzen eingesetzt. Dem Fachmann bekannt sind weiterhin auch Rollbond-Verfahren, bei denen mit Druckluft aufgeblasen wird.

Weitere Einzelmerkmale und Vorteile der Erfindung ergeben sich aus der nachfolgenden Beschreibung der Ausführungsbeispiele und aus den Zeichnungen. Es zeigen:
- Figur 1:: eine perspektivische Darstellung eines erfindungsgemässen Solarabsorbers,
- Figur 2:: der Rückansicht des Solarabsorbers gemäss Figur 1 ,
- Figur 3:: eine Seitenansicht auf den Wärmetauscherbereich des Solarabsorbers gemäss Figur 1,
- Figur 4:: einen Querschnitt durch einen Solarabsorber gemäss Figur 1,
- Figur 5:: eine perspektivische Darstellung eines Solarabsorbers gemäss einem zweiten Ausführungsbeispiel,

- Figur 6:: eine Seitenansicht auf den Wärmetauscherbereich des Solarabsorbers gemäss Figur 5 in vergrösserter Darstellung,
- Figur 7:: einen Querschnitt durch den Solarabsorber gemäss Figur 5,
- Figur 8:: eine perspektivische Darstellung eines Solarabsorbers gemäss einem dritten Ausführungsbeispiel,
- Figur 9:: eine Explosionsdarstellung des Solarabsorbers gemäss Figur 8,
- Figur 10:: einen perspektivischen Längsschnitt durch den Solarabsorbers gemäss Figur 8, und
- Figur 11:: eine stark vergrösserte Darstellung eines Schnitts durch den Solarabsorbers im Absorberbereich (Schnitt A-A gemäss Fig. 10)

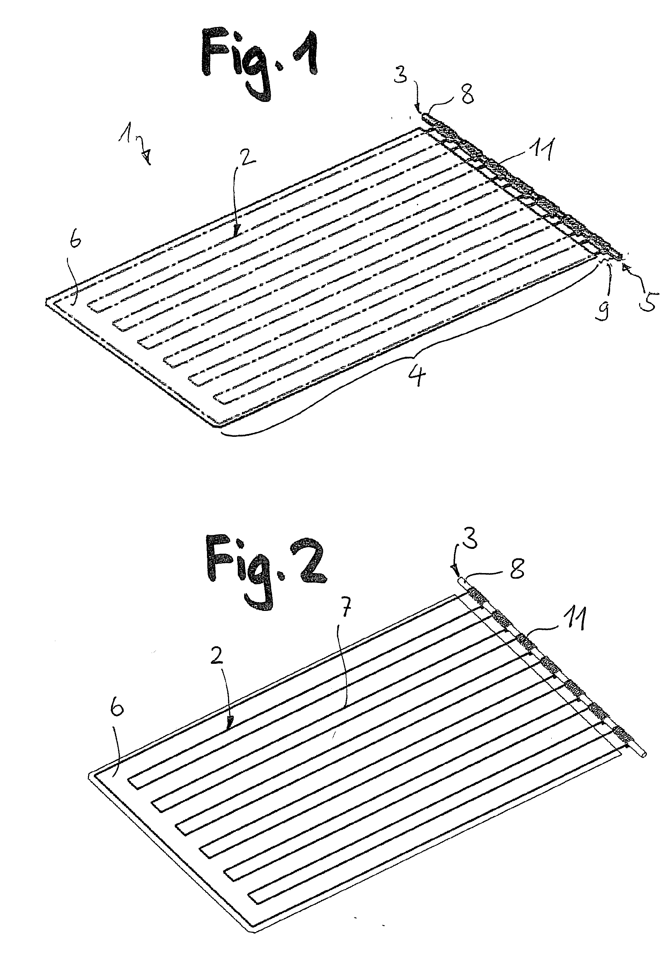

Figur 1 zeigt einen insgesamt mit 1 bezeichneten thermischen Solarabsorber. Dieser besteht im Wesentlichen aus einem auf einer sogenannten Pulsating-Heat-Pipe (nachfolgend abgekürzt "PHP") basierenden Primärkreislauf 2, der in thermischer Wirkverbindung mit einer Sekundärleitung 3 steht. Die PHP ist in einem durch einen Flächenabschnitt vorgegebenen Absorberbereich 4 ersichtlicherweise mäanderförmig ausgebildet. Der Flächenabschnitt ist bevorzugt durch ein Absorberblech aus einem metallischen Material gebildet, auf dessen Rückseite die Rohrwindungen der Mäanderanordnung des Primärkreislaufes 2 geführt sind (angedeutet durch eine strichpunktierte Linie). Grundsätzlich wäre es auch vorstellbar, statt eines Primärkreislaufes das Primärsystem mit dem Arbeitsmedium auch als sogenannten "Closed End" auszuführen. In einem mit 5 bezeichneten Wärmetauscherbereich des Solarabsorbers sind mehrere Rohrwindungen 11 erkennbar, die eine die Sekundärleitung bildende Rohrleitung 8 umgeben.

Im Primärkreislauf 2 befindet sich ein Arbeitsmedium, das sich im Absorberbetrieb aufgeteilt in abwechselnde kleine Abschnitte gasförmiger und flüssiger Phase pulsierend durch den Primärkreislauf bewegt. Dadurch wird die vom Absorberblech absorbierte Energie im Primärkreislauf in Form von sensibler als auch latenter Wärme vom Absorberbereich 4 zum Wärmetauscherbereich 5 transportiert und dort an das Wärmeträgermedium des Solarkreislaufes abgegeben. Das Arbeitsmedium kann beispielsweise aus Aceton bestehen. Selbstverständlich kommen aber auch als Arbeitsmedien alle anderen Kältemittel (wie z.B. Wasser, Ammoniak, Methanol, Heptan, Pentan, Dodecan, Hexan, Toluol, FKW, HFKW, FCKW, HFCKW) für die PHP in Frage. Als Wärmeträgerfluid wird in der Regel ein auf Wasser basierendes Fluid verwendet, wobei dieses verschiedene Zusätze enthalten kann. In der Praxis haben sich insbesondere Wasser-Glykol-Gemische als vorteilhaft erwiesen.

Figur 2 zeigt zur besseren Erkennbarkeit der Leitungsführung des Primärkreislaufs den Solarabsorber 1 aus Figur 1, in rückseitiger Ansicht. Die Rohre bzw. die einzelnen miteinander verbundenen Rohrabschnitte 7 des Primärkreislaufs 2 bestehen insbesondere aus Kostengründen aus Aluminium oder einer Aluminiumlegierung, wobei der Einfachheit halber nachfolgend auch für Legierungen der Begriff "Aluminium" verwendet wird. Das Absorberblech besteht ebenfalls bevorzugt aus Aluminium, wodurch unerwünschte unterschiedliche Wärmeausdehnungen der beiden Komponenten vermieden werden. Je nach Anwendungsgebiet sind aber auch andere Materialien (z.B. Kupfer, Stahl) einsetzbar. Die Rohre sind vorzugsweise mit dem Absorberblech verschweisst, verlötet oder auf eine andere Weise thermisch und mechanisch gut verbunden.

Somit wird ein direkter Kontakt zwischen Aluminium und dem Wärmeträgerfluid vermieden, was sich vorteilhaft auf die Korrosionsbeständigkeit des Solarabsorbers auswirkt. Ein weiterer Vorteil dieser Konstruktion besteht darin, dass eine maximale Arbeitstemperatur einstellbar ist. Bei einer PHP stoppt bei Überschreitung einer bestimmten Arbeitstemperatur der Wärmetransport, das Wärmeträgerfluid, das den Solarabsorber im Wärmetauscherbereich bzw. im Kondensator durchströmt wird vor zu hohen Temperaturen geschützt. Der bei konventionellen Solarabsorbern im Laufe der Zeit nötige Austausch von Wärmeträgerfluid ist bei der vorliegenden Anordnung nicht mehr nötig.

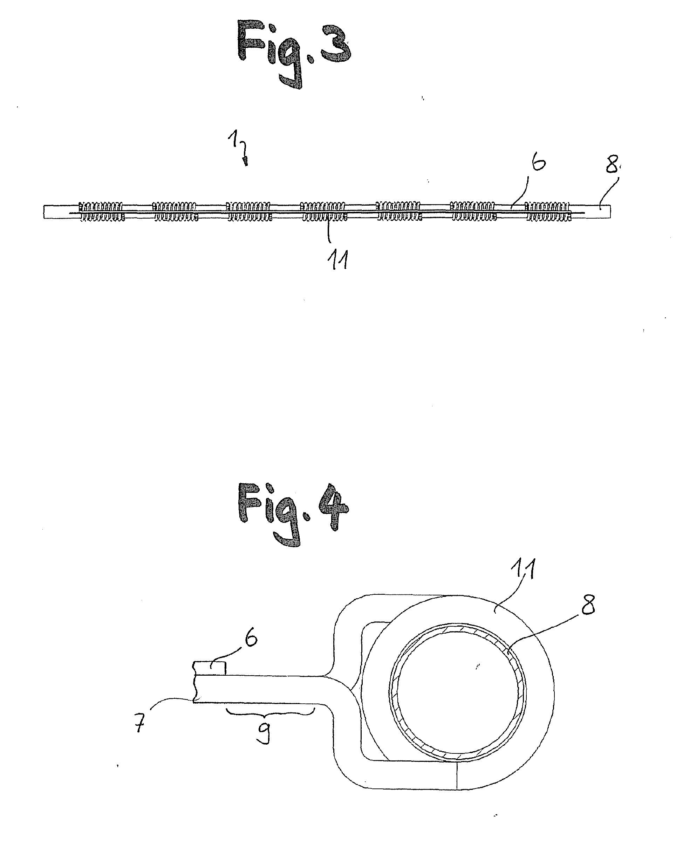

Figur 3 zeigt, dass die Rohrwindungen 11 aussen liegend angebracht sind.

Figur 4 zeigt, dass die Rohre 7 im Absorberbereich unmittelbar unterhalb des Absorberblechs 6 geführt sind und in Kontakt mit diesem stehen. Für einen Wärmeübergang sind die Rohre 7 mit dem Absorberblech 6 verschweisst, verlötet oder auf eine andere Weise thermisch und mechanisch gut verbunden. Dieser Flächenabschnitt deckt nur den Absorberbereich 4 ab. Die Rohre 7 liegen zwischen dem Wärmetauscherbereich und dem Absorberbereich ersichtlicherweise frei. Dieser Bereich der Rohre, der den Absorberbereich zum Wärmetauscherbereich überbrückt, wird als adiabatischer Abschnitt 9 der PHP bezeichnet.

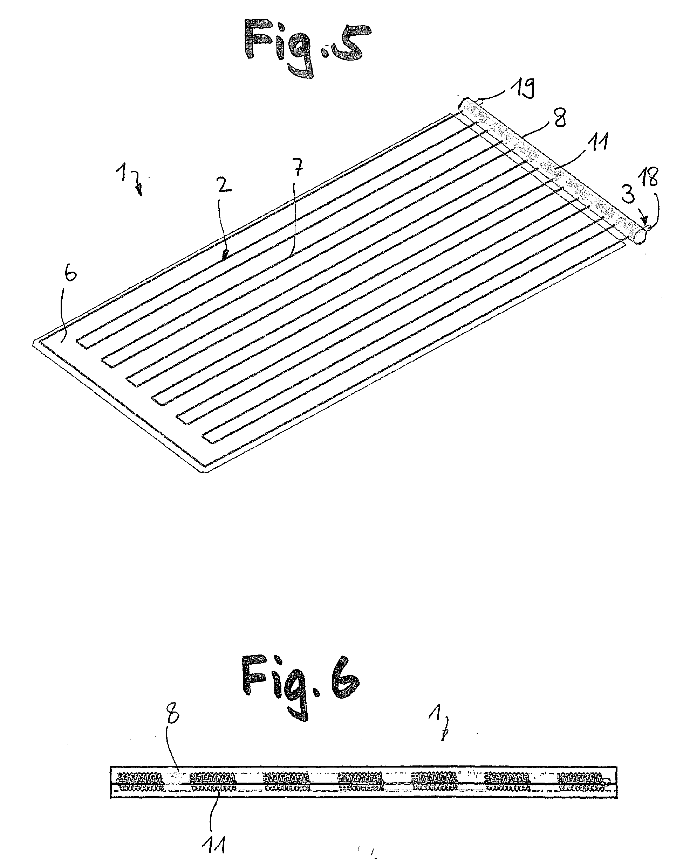

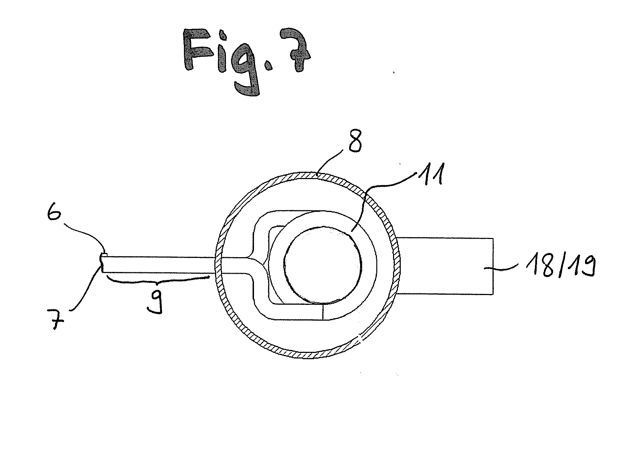

Wie aus Figur 5 bis 7 hervorgeht, können die Windungen 11 auch innerhalb einer Sekundärleitung 3 für das Wärmeträgerfluid angeordnet sein. Anstatt der einfachen Rohrleitung gemäss Figur 1 wird hier ein Rohr 8 verwendet, das auf seinen gegenüberliegenden Seiten geschlossen ist und stattdessen mantelseitige Einlassstutzen 18 und Auslassstutzen 19 aufweist (optional oder alternativ kann der Solarabsorber auch über stirnseitige Stutzen an den Solarkreislauf angeschlossen werden). Ansonsten ist der Solarabsorber 1 gleichartig wie der Solarabsorber nach den Ausführungsbeispielen gemäss den Figuren 1 bis 4 ausgebildet. Auch hier bestehen sämtliche Komponenten des Solarabsorbers - ausser evt. der Rohrleitung 8 - aus Aluminium. In diesem Ausführungsbeispiel steht das Wärmeträgerfluid des Solarkreises in direktem Kontakt mit den aus Aluminium bestehenden Rohrwindungen 11 des Primärkreises. Zur Vermeidung von Korrosion wird die PHP so ausgelegt, dass diese maximal bis zu einer Temperatur arbeitet, bei der der Korrosionsschutz durch das Wärmeträgerfluid noch sichergestellt ist. Bei den üblicherweise verwendeten Wasser-Glykol-Gemischen liegt diese Maximaltemperatur bei etwa 150°C. Anstatt Aluminium sind aber auch andere Materialien (z.B. Kupfer, Stahl) einsetzbar.

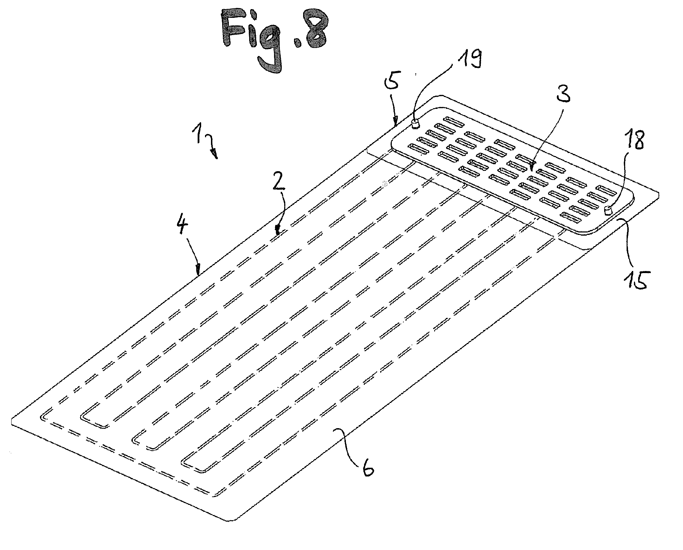

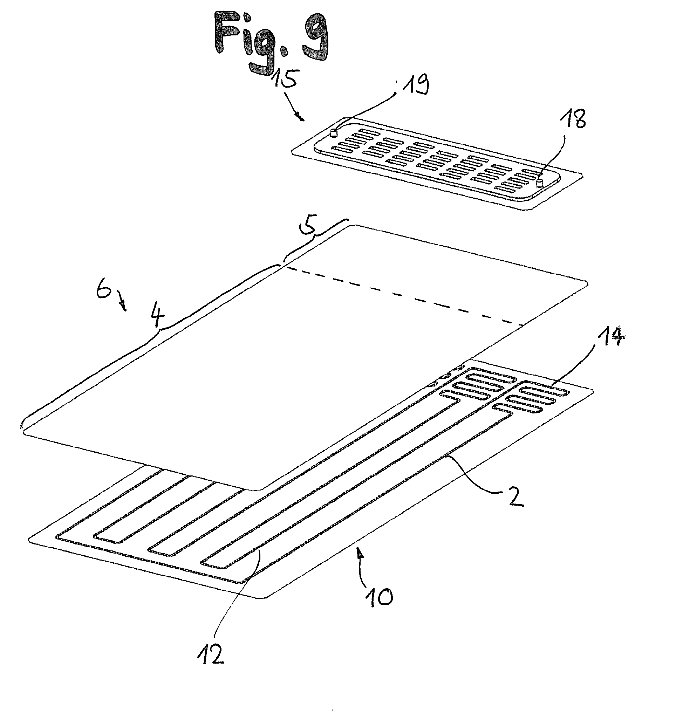

Figur 8 zeigt einen Solarabsorber 1 in Sandwich-Bauweise, der aus flächigen Komponenten besteht, die aufeinander aufliegen. Dieser Solarabsorber 1 zeichnet sich unter anderem durch eine flache Bauweise und eine sehr geringe Bauhöhe aus. In thermischer Hinsicht funktioniert er auf die gleiche Weise wie bei den vorangegangenen Beispielen. Der mit 2 angedeutete Primärkreislauf basiert also ebenfalls auf dem PHP-Prinzip. Der das Arbeitsmedium beinhaltende Primärkreislauf wird allerdings hier nicht mehr durch separate Rohre, sondern durch ein integriertes Kanalsystem gebildet. Als Primärsystem 2 ist ein Primärleitungssystem vorgesehen, das im Absorberbereich und im Wärmetauscherbereich etwa auf einer gemeinsamen Ebene liegt. Der genaue Aufbau des Solarabsorbers 1 ist nachfolgend anhand der Figuren 9 bis 11 im Detail beschrieben.

Figur 9 zeigt die einzelnen Komponenten des Solarabsorbers. Die Hauptkomponenten sind: ein Absorberblech 6, ein erstes Flächenelement 10 sowie ein zweites Flächenelement 15. Das Flächenelement 10, dessen äussere Abmessungen (d.h. dessen Länge und Breite) etwa denjenigen des Absorberblechs entspricht, weist kanalartige Vertiefungen auf, in denen das Arbeitsmedium der PHP aufnehmbar ist. Bevorzugt bestehen die drei Komponenten 6, 10 und 15 aus Aluminium. In Frage kommen aber auch andere metallische Materialien. Anstatt einer Fertigung nach dem Rollbondverfahren können auch andere Fertigungsverfahren wie z.B. Tiefziehen für die Herstellung der jeweiligen Komponenten angewandt werden. Grundsätzlich wäre es sogar auch vorstellbar, Kunststoffmaterialien oder sogar Verbundwerkstoffe einzusetzen.

Ersichtlicherweise umfasst das Absorberblech 6 sowohl den Absorberbereich 4 als auch den Wärmetauscherbereich 5. Mit einer strichlierten Linie ist eine Trenngrenze der beiden Bereiche angedeutet. Das Absorberblech 6 ist einstückig ausgebildet, wobei es im Absorberbereich auf seiner Oberseite mit einer hochselektiven Absorberschicht beschichtet sein kann. Sowohl im Absorberbereich 4 als auch im Wärmetauscherbereich 5 ist das Primärleitungssystem 2 jeweils mäanderförmig ausgestaltet. Es weist im Absorberbereich 4 sich in Längsrichtung erstreckende Mäanderschlaufen 12 und im Wärmetauscherbereich 5 sich quer zur Längsrichtung des Absorberbereichs erstreckende Mäanderschlaufen 14 auf. An den wärmetauscherseitigen Enden der Mäanderschlaufen 12 schliessen ersichtlicherweise jeweils drei Mäanderschlaufen 14 an. Man könnte je Mäanderschlaufe 12 aber auch eine andere Anzahl von Mäanderschlaufen 14 wählen, wobei wenigstens zwei Mäanderschlaufen 14 sich als vorteilhaft erwiesen haben. Theoretisch ist es aber auch denkbar, dass an eine Mäanderschlaufe des Absorberbereichs im Wärmetauscherbereich nur eine dem Wärmetauscherbereich zugeordnete Mäanderschlaufe anschliessen könnte.

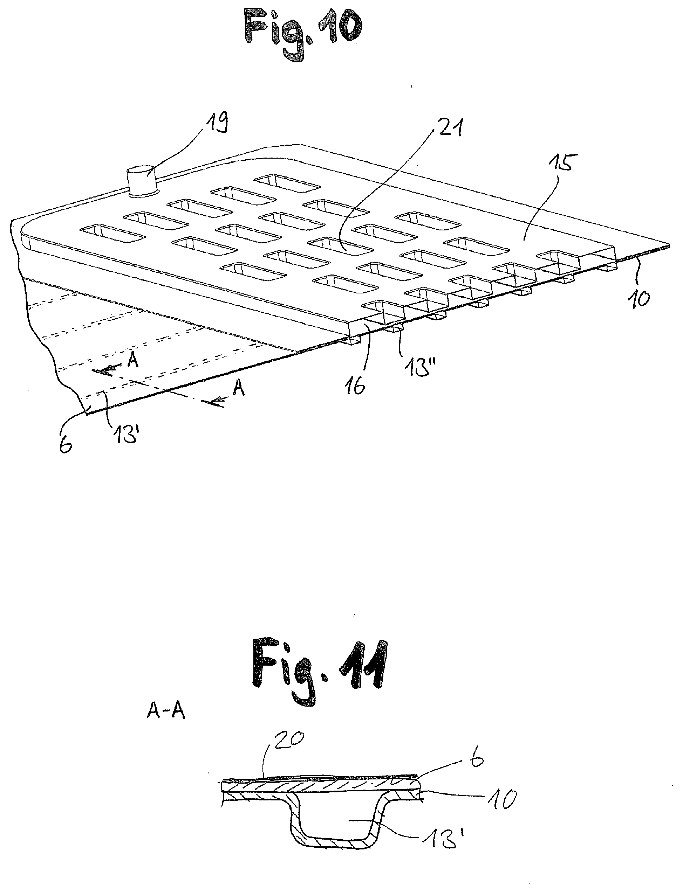

Figur 10 zeigt einen Längsschnitt durch den Solarabsorber 1. Hieraus ist etwa erkennbar, dass sämtliche Komponenten des Solarabsorbers aus Blech gebildet sind. Das Absorberblech 6 ist sandwichartig zwischen dem ersten Flächenelement und dem zweiten Flächenelement im Wärmetauscherbereich bzw. im Bereich der Überlappungsfläche befestigt. Das Primärleitungssystem besteht aus Kanälen, die durch das erste Flächenelement 10 geformt und insbesondere mittels eines Rollbond-Verfahrens geschaffen sind. Mit 13' sind Kanäle des Primärkreislaufes im Wärmetauscherbereich bezeichnet. Diese sind im Querschnitt ersichtlicherweise etwa rechteckförmig ausgebildet. Selbstverständlich sind auch andere Formgebungen für die Kanalquerschnitte vorstellbar.

Das Wärmeträgerfluid des Solarkreislaufes wird im Wärmetauscherbereich durch ein Kanalsystem mit ebenfalls im Querschnitt rechteckförmigen Hohlräumen 16 geführt. Selbstverständlich sind auch andere Formen für diese Hohlräume vorstellbar. Zum Bilden eines Kanalsystems zwischen Absorberblech 6 und dem zweitem Flächenelement 15 sind die U-förmigen Erhebungen 16 des zweiten Flächenelements 15 gegen das Absorberblech 6 offen ausgebildet. Der Wärmetauschbereich für das Wärmeträgerfluid ist von nach innen gerichteten Wannen 21 durchsetzt, wodurch sich eine turbulente Strömung zur besseren Wärmeübertragung ausbildet. Das Kanalsystem des Wärmetauschers kann selbstverständlich auch in einer anderen Form, wie z.B. mäanderförmig oder harfenförmig ausgebildet sein. Da der Solarabsorber wenigstes im Absorberbereich vollständig oder nahezu vollständig aus Aluminium besteht, ergeben sich keine unerwünschten thermisch induzierten Deformationen. Ein weiterer Vorteil dieser Materialwahl besteht darin, dass die Investitionskosten für Kollektoren massiv gesenkt werden können.

In Figur 11 ist stark vergrössert ein mit 13' bezeichneter Kanal des Primärkreislaufes im Absorberbereich erkennbar. Der Kanal 13' ist etwa rechteckig ausgebildet und wird durch eine etwa U-förmige Vertiefung im ersten Flächenelement 10 auf der einen Seite und durch das etwa plane Absorberblech 6 auf der anderen Seite gebildet. Weiterhin ist erkennbar, dass auf der Oberseite des Absorberblechs 6 eine spezielle Absorberschicht 20 angeordnet ist, mit der die solare Einstrahlung effizient in thermische Energie umwandelbar ist.

## Patentansprüche

1. Solarabsorber mit wenigstens einem geschlossenen Primärsystem (2), insbesondere mit wenigstens einem Primärkreislauf enthaltend ein Arbeitsmedium, das in einem Absorberbereich (4) erwärmbar ist und in einem Wärmetauscherbereich (5) mit einer Sekundärleitung (3) in thermischer Wirkverbindung steht, durch welche ein Wärmeträgerfluid durchführbar ist, wobei das Primärsystem (2) auf einem Wärmerohr (Heat Pipe)-Prinzip basiert und wobei das Primärsystem (2) wenigstens im Absorberbereich (4) entlang eines Flächenabschnitts (6), geführt ist, **dadurch gekennzeichnet, dass** das Primärsystem (2) im Wärmetauscherbereich (4) eine Mehrzahl von Schlaufen (14) und/oder Windungen (11) aufweist und dass die Sekundärleitung (3) an den Schlaufen (14) und/oder Windungen (11) anliegt oder diese aufnimmt

2. Solarabsorber nach Anspruch 1, **dadurch gekennzeichnet, dass** das Primärsystem (2) als Pulsating-Heat-Pipe (PHP) ausgestaltet ist.

3. Solarabsorber nach Anspruch 1 oder 2, **dadurch gekennzeichnet, dass** der Flächenabschnitt durch ein Absorberblech (6) gebildet ist.

4. Solarabsorber nach einem der Ansprüche 1 bis 3, **dadurch gekennzeichnet, dass** das Primärsystem (2) im Absorberbereich (4) durch wenigstens ein Rohr (7) gebildet ist, das am Flächenabschnitt (6) befestigt ist.

5. Solarabsorber nach einem der Ansprüche 1 bis 4, **dadurch gekennzeichnet, dass** das Primärsystem (2) im Absorberbereich (4) durch wenigstens ein Rohr (7) gebildet ist, wobei es mit wenigstens einer schraubenförmigen Rohrwindung (11) verbunden ist, die in einer oder um eine Rohrleitung (8) für das Wärmeträgerfluid angeordnet ist.

6. Solarabsorber nach Anspruch 4 oder 5, **dadurch gekennzeichnet, dass** der Flächenabschnitt (6) nur den Absorberbereich (4) abdeckt und dass das Rohr (7) im Verbindungsbereich zwischen dem Absorberbereich (4) und der schraubenförmigen Rohrwindung (11) zur Bildung eines adiabatischen Abschnitts (9) für die Pulsating-Heat-Pipe (PHP) frei liegt.

7. Solarabsorber nach einem der Ansprüche 4 bis 6, **dadurch gekennzeichnet, dass** das Rohr (7) des Absorberbereichs (4) und die dem Wärmetauscherbereich (5) zugeordnete Rohrwindung (11) aus demselben Material wie das Absorberblech (6) bestehen.

8. Solarabsorber, bei dem das Primärsystem (2) wenigstens im Absorberbereich (4) entlang eines Absorberblechs (6) geführt ist, nach einem der Ansprüche 1 bis 3, **dadurch gekennzeichnet, dass** zur Aufnahme des Arbeitsmediums des Primärsystems (2) ein Primärleitungssystem vorgesehen ist, das im Absorberbereich (4) und im Wärmetauscherbereich (5) auf einer gemeinsamen Ebene liegt.

9. Solarabsorber nach Anspruch 8, **dadurch gekennzeichnet, dass** zur Aufnahme des Arbeitsmediums des Primärsystems (2) ein Primärleitungssystem vorgesehen ist, das zwischen dem Absorberblech (6) und einem an diesem anliegenden, vorzugsweise durch ein Blech gebildetes erstes Flächenelement (10) angeordnet ist.

10. Solarabsorber nach Anspruch 8 oder 9, **dadurch gekennzeichnet, dass** das Primärleitungssystem aus Kanälen (13) besteht, die wenigstens durch das erste Flächenelement (10) geformt und insbesondere mittels eines Rollbond-Verfahrens geschaffen sind.

11. Solarabsorber nach einem der Ansprüche 8 bis 10, **dadurch gekennzeichnet, dass** das Primärleitungssystem im Absorberbereich (4) und im Wärmetauscherbereich (5) jeweils mäanderförmig ausgestaltet ist.

12. Solarabsorber nach einem der Ansprüche 8 bis 11, **dadurch gekennzeichnet, dass** das Primärleitungssystem im Absorberbereich (4) sich in Längsrichtung erstreckende Mäanderschlaufen (12) und der Wärmetauscherbereich (5) sich quer zur oder in Längsrichtung des Absorberbereichs (4) erstreckende Mäanderschlaufen (14) aufweist.

13. Solarabsorber nach einem der Ansprüche 8 bis 12, **dadurch gekennzeichnet, dass** das Primärleitungssystem im Absorberbereich (4) wenigstens eine sich in Längsrichtung erstreckende Mäanderschlaufe (12) aufweist, an deren wärmetauscherseitigen Enden jeweils eine Mäanderanordnung des Wärmetauscherbereichs (5) mit wenigstens zwei Mäanderschlaufen (14) anschliesst.

14. Solarabsorber nach einem der Ansprüche 8 bis 13, **dadurch gekennzeichnet, dass** im Wärmetauscherbereich (5) an der Oberseite des Absorberblechs (6) ein mit Hohlräumen (16) versehenes, vorzugsweise aus einen Blech bestehendes zweites Flächenelement (15) befestigt ist, durch welches Wärmeträgerfluid durchführbar ist.

15. Solarabsorber nach einem der Ansprüche 8 bis 14, **dadurch gekennzeichnet, dass** zum Bilden eines Kanalsystems zwischen Absorberblech (6) und zweitem Flächenelement (15) die Hohlräumen (16) des zweiten Flächenelements (15) gegen das Absorberblech (6) offen sind.

16. Solarabsorber nach einem der Ansprüche 8 bis 15, **dadurch gekennzeichnet, dass** das Absorberblech (6) und wenigstens das erste Flächenelement (10) sowie gegebenenfalls das zweite Flächenelement (15) aus Aluminium oder aus einer Aluminiumlegierung bestehen.

17. Solarabsorber nach einem der Ansprüche 1 bis 16, **dadurch gekennzeichnet, dass** das Primärsystem (2) eine Pulsating-Heat-Pipe (PHP) aufweist, die derart ausgelegt ist, dass im Wärmetauscherbereich (5) eine Arbeitstemperatur für das Arbeitsmedium von 150°C und bevorzugt 130°C nicht überschritten werden kann.

18. Verfahren zum Herstellen eines Solarabsorbers nach einem der Ansprüche 8 bis 17, **dadurch gekennzeichnet, dass** die Kanäle (13) für das Primärsystem (2) zwischen dem Absorberblech (6) und dem daran anliegenden ersten Flächenelement (10) mittels eines Rollbond-Verfahrens geformt werden.
